# EUROPÄISCHE PATENTSCHRIFT

(11) **EP 2 720 304 B1**
(45) Veröffentlichungstag und Bekanntmachung des Hinweises auf die Patenterteilung: **28.03.2018**
(21) Anmeldenummer: 12188541.2
(22) Anmeldetag: 15.10.2012
(51) Int. Cl.: H01M 4/62, H01M 4/42, H01M 4/24, H01M 10/28

(54) **Elektrochemische Zelle mit Zink-Indium-Elektrode**
Electrochemical cell with zinc indium electrode
Cellule électrochimique avec électrode zinc-indium

(43) Veröffentlichungstag der Anmeldung: 16.04.2014
(73) Patentinhaber: VARTA Microbattery GmbH, 73479 Ellwangen (DE)
(72) Erfinder: Csrenko, Cornelia, 73433 Aalen (DE); Kohls, Ulrich, 73433 Aalen (DE); Kreidler, Bernd, 73479 Ellwangen (DE); Löffelmann, Hermann, 73479 Ellwangen (DE); Rupp, Andreas, 73565 Spraitbach (DE)
(74) Vertreter: Patentanwaltskanzlei Cartagena

(56) Entgegenhaltungen:
- JP-A- 61 077 267
- US-A- 5 128 222
- US-A- 5 240 793
- US-A1- 2001 009 741

## Beschreibung

Die vorliegende Erfindung betrifft eine elektrochemische Zelle mit einer Elektrode, die als elektrochemisches Aktivmaterial eine Zink-Indium-Legierung aufweist.

Das Anwendungsgebiet der vorliegenden Erfindung erstreckt sich auf Zellen mit Zinkelektroden, insbesondere alkalische Zellen mit Zinkelektroden. Beispiele hierfür sind Zellen vom Zink-Braunstein-Typ, insbesondere Alkali-Mangan-Zellen, Zink-Luft-Zellen, Zink-Silberoxid-Zellen und Zink-Quecksilberoxid-Zellen. Alle diese Zellen weisen ein Zellgehäuse auf, in dem eine mit einem alkalischen Elektrolyten getränkte Zink-Anode angeordnet ist. Das Zink liegt in der Regel partikelförmig vor.

Bekanntlich ist Zink in alkalischem Milieu thermodynamisch instabil. Zinkelektroden alkalischer Zellen unterliegen deshalb häufig einem Korrosionsprozess, bei dem es zu einer Wasserstoffentwicklung kommt. In Folge der Wasserstoffentwicklung kann es zu einem starken Druckanstieg im Inneren des Zellgehäuses kommen, in Folge dessen Elektrolyt an Schwachstellen des Zellgehäuses nach außen tritt. Dadurch kann sich die Lebensdauer alkalischer Zellen stark verkürzen.

Durch Amalgamierung des Zinkpulvers lässt sich die Gasbildung in den Zellen weitgehend unterdrücken. Der Zusatz von Quecksilber ist aufgrund seiner starker Toxizität in nahezu allen Ländern der Welt allerdings nicht mehr zulässig. Entsprechend besteht ein Bedarf an technischen Alternativen zur Amalgamierung.

Eine bekannte Alternative zur Amalgamierung stellt der Zusatz von Indium dar, das dem verwendeten Zink zulegiert werden kann. Das Indium erhöht die Wasserstoffüberspannung und trägt so zu verminderter Korrosion bei.

Zink-Indium-Elektroden sind beispielsweise aus den Dokumenten US 5128222 A, JP 61 077267 A und US 5128222 A bekannt.

Der vorliegenden Erfindung lag die Aufgabe zugrunde, verbesserte Zinkelektroden für Alkalizellen bereitzustelllen.

Diese Aufgabe wird gelöst durch die elektrochemische Zelle mit den Merkmalen des Anspruchs 1. Bevorzugte Ausführungsformen der Zelle sind in den abhängigen Ansprüchen 2 bis 8 angegeben. Weiterhin trägt auch das Verfahren mit den Merkmalen den Anspruchs 9 zur Lösung der genannten Aufgabe bei. Der Wortlaut sämtlicher Ansprüche wird hiermit durch Bezugnahme zum Inhalt der Beschreibung gemacht.

Die erfindungsgemäße elektrochemische Zelle umfasst mindestens eine Elektrode, insbesondere mindestens eine Anode, die als elektrochemisches Aktivmaterial eine Zink-Indium-Legierung aufweist. Die Legierung liegt dabei in Form von Partikeln vor.

Besonders zeichnet sich die Zelle dadurch aus, dass sich die Gesamtheit der Partikel aus mindestens zwei Partikelfraktionen zusammensetzt, die sich hinsichtlich ihrer Indium-Konzentration unterscheiden. Während innerhalb ein und derselben Fraktion alle Partikel die gleiche Indium-Konzentration aufweisen, unterscheiden sich die Partikel diesbezüglich von Fraktion zu Fraktion. Mit anderen Worten, die erfindungsgemäße Zelle umfasst eine Mischung aus einer ersten partikelförmig vorliegenden Zink-Indium-Legierung mit einer ersten Konzentration an Indium und mindestens einer weiteren partikelförmig vorliegenden Zink-Indium-Legierung mit einer zweiten, von der ersten verschiedenen Konzentration an Indium.

Überraschenderweise wurde gefunden, dass der Einsatz einer Mischung aus sich bezüglich der Indium-Konzentration unterscheidenden Zinklegierungen zu einer deutlichen Erhöhung der Kapazitätswerte von Zinkelektroden führen kann, verglichen mit Zinkelektroden, in denen nur einer Sorte einer Zinklegierung enthalten ist.

Bevorzugt setzt sich die Gesamtheit der Partikel aus genau zwei Fraktionen, also einer ersten und einer zweiten Fraktion, zusammen. Es sind aber ohne weiteres auch Mischungen aus drei oder mehr Fraktionen möglich.

Der Gesamtanteil an Indium in der Zelle liegt, bezogen auf das insgesamt in der Zelle enthaltene Zink, zwischen 50 ppm und 10.000 ppm, bevorzugt zwischen 50 ppm und 5.000 ppm, besonders bevorzugt zwischen 100 ppm und 2.500 ppm, insbesondere zwischen 300 ppm und 2.000 ppm. In bevorzugten Ausführungsformen würde man eine Legierung mit einer Indium-Konzentration innerhalb eines dieser Bereiche erhalten, wenn man sämtliche Partikel in der Zelle durch Einschmelzen homogenisieren würde.

Besonders bevorzugt umfasst die Gesamtheit der Partikel eine erste Partikelfraktion aus Partikeln mit einer Indium-Konzentration von bis zu 2.500 ppm, bevorzugt von bis zu 1.000 ppm, besonders bevorzugt von bis zu 500 ppm, sowie eine zweite Partikelfraktion aus Partikeln mit einer Indium-Konzentration von bis zu 10.000 ppm, bevorzugt von bis zu 5.000 ppm, besonders bevorzugt von bis zu 2.500 ppm, wobei die Indium-Konzentration in der zweiten Partikelfraktion höher liegt als in der ersten.

Es ist auch möglich (wenn auch nicht bevorzugt), dass eine Fraktion aus Zinkpartikeln mit 0 ppm Indium besteht. In diesem Fall setzt sich die Gesamtheit der Partikel bevorzugt aus drei oder mehr Fraktionen zusammen.
Bevorzugt unterscheidet sich die Indium-Konzentrationen in den mindestens zwei Partikelfraktionen, insbesondere in der ersten und der zweiten Partikelfraktion, mindestens um den Faktor 1,1. Besonders bevorzugt liegt der Faktor zwischen 2 und 10, insbesondere zwischen 5 und 10.

In einer besonders bevorzugten Ausführungsform gehören
- zwischen 1 % und 99 %, bevorzugt zwischen 5 % und 75 %, insbesondere zwischen 10 % und 50 %, der Partikel der ersten Partikelfraktion und
- zwischen 1 % und 99 %, bevorzugt zwischen 5 % und 75 %, insbesondere zwischen 10 % und 50 %, der Partikel der zweiten Partikelfraktion
an, wobei sich die Prozentangaben zu 100 % ergänzen, wenn die Gesamtheit der Partikel aus zwei Partikelfraktionen besteht.

Bevorzugt unterscheiden sich die Partikel der mindestens zwei Fraktionen in ihrer Größe nicht. Die Partikelgrößen sind aber kein besonders wichtiger Aspekt der vorliegenden Erfindung. In der Regel liegt die mittlere Partikelgröße der Partikel in der Zelle zwischen 1 µm und 500 µm.

Neben dem elektrochemischen Aktivmaterial umfasst die Elektrode einer erfindungsgemäßen Zelle in der Regel mindestens einen der folgenden Bestandteile:
- Einen Elektrolyten, insbesondere einen alkalischen Elektrolyten,
- Einen Elektrodenbinder
- Einen Leitfähigkeitsverbesserer

Als Elektrolyt kommen in der Regel Natron- oder Kalilauge zum Einsatz. Als Elektrodenbinder kommen beispielsweise Natriumcarboxymethylzellulose oder ein Polyacrylat zum Einsatz. Geeignete Leitfähigkeitsverbesserer sind beispielsweise Indiumverbindungen wie Indiumoxid oder Indiumhydroxid, unter Umständen auch Ruß oder Graphit.

Die erfindungsgemäße Zelle weist bevorzugt als Kathode eine Braunsteinkathode, eine Luftkathode, eine Silber(I)-Oxidkathode oder eine Quecksilberoxidkathode auf. Entsprechend handelt es sich bei der Zelle bevorzugt um eine Zelle vom Zink-Braunstein-Typ, insbesondere eine Alkali-Mangan-Zelle, eine Zink-Luft-Zelle, eine Zink-Silberoxid-Zelle oder eine Zink-Quecksilberoxid-Zelle. Weiterhin kann die erfindungsgemäße Zelle auch eine Gasentwicklungszelle sein, beispielsweise mit einem Aufbau wie er in der DE 3532335 A1 beschrieben ist.

Insbesondere, wenn es sich bei der erfindungsgemäßen Zelle um eine Zink-Luft-Zelle handelt, kommen als Leitfähigkeitsverbesserer das Indiumoxid und/oder das Indiumhydroxid zum Einsatz.

Besonders bevorzugt handelt es sich bei dem erfindungsgemäßen galvanischen Element um eine Knopfzelle. Als solche weist ein erfindungsgemäßes galvanisches Element vorzugsweise ein metallisches Gehäuse aus zwei Halbteilen, nämlich einem Zellenbecher und einem Zellendeckel auf. Besonders geeignet sind Zellenbecher und Zellendeckel aus vernickeltem Stahl oder aus einem sogenannten Trimetall (eine Schichtanordnung aus drei Metallen). Als Trimetall sind insbesondere Stahlbleche mit einer innenliegenden Beschichtung aus Kupfer und einer außenliegenden Beschichtung aus Nickel einsetzbar.

Das erfindungsgemäße Verfahren dient zur Herstellung einer Elektrode für die beschriebene Zelle, die als elektrochemisches Aktivmaterial eine partikelförmig vorliegende Zink-Indium-Legierung aufweist. Erfindungsgemäß werden zur Einstellung der Konzentration an Indium in der Anode Zinkpartikel mit einer ersten Konzentration an Indium mit Zinkpartikeln mit einer zweiten, von der ersten verschiedenen Konzentration an Indium gemischt. Die Zinkpartikel mit der ersten Konzentration an Indium bilden in der Elektrode die oben beschriebene erste Partikelfraktion, die Zinkpartikel mit der zweiten Konzentration an Indium die zweite Partikelfraktion.

Die genannten und weitere Vorteile der Erfindung ergeben sich aus der nun folgenden Beschreibung von bevorzugten Ausführungsformen in Verbindung mit den Zeichnungen und den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Beispiele

(1) Herstellung einer Referenzzelle A (System Zink/Luft)
Zur Herstellung einer Zinkelektrode wurde eine partikelförmig vorliegende Zink-Indium-Legierung mit einer Konzentration an Indium von 300 ppm sowie mit einer mittleren Partikelgröße von ca. 150 µm mit Indiumhydroxid als Leitfähigkeitsverbesserer sowie Polyacrylsäure als Binder vermischt. Die Anteile an dem Leitadditiv und dem Binder in der Mischung betrugen 0,1 Gew.-% (Leitadditiv) bzw. 0,3 Gew.-% (Binder). Der Zink-Anteil lag entsprechend bei 99,6 Gew.-%.
Die drei Komponenten wurden intensiv miteinander vermischt. Anschließend wurde das erhaltene Pulver in den Zellendeckel eines Knopfzellengehäuses eingerieselt und mit einem alkalischen Elektrolyten versetzt. Der Zellendeckel wurde mit einer geeigneten Dichtung kombiniert sowie anschließend in einen passenden, eine Luft-SauerstoffElektrode und einen Separator enthaltenden Zellenbecher eingeschoben. Das Gehäuse aus den beiden Halbteilen wurde abschließend durch einen Bördelvorgang verschlossen.
(2) Herstellung einer Referenzzelle B (System Zink/Luft)
Analog zum Vorgehen gemäß (1) wurde eine weitere Referenzzelle hergestellt, mit einer einzigen Abweichung: An Stelle der partikelförmig vorliegenden Zink-Indium-Legierung mit einer Konzentration an Indium von 300 ppm kam eine Zink-Indium-Legierung Legierung mit einer Konzentration an Indium von 2.000 ppm zum Einsatz.
(3) Herstellung einer erfindungsgemäßen Zellen C (System Zink/Luft)
Analog zum Vorgehen gemäß (1) und (2) wurden einige Ausführungsformen erfindungsgemäßer Zellen hergestellt, mit einer einzigen Abweichung: An Stelle der partikelförmig vorliegenden Zink-Indium-Legierungen mit einer Konzentration an Indium von 300 ppm und 2000 ppm kam eine Mischung der beiden in (1) und (2) verwendeten Legierungen zum Einsatz und zwar im Verhältnis 3,3 : 1 (300 ppm : 2.000 ppm).
(4) Zum Vergleich der Kapazitätswerte der erfindungsgemäßen Zelle mit denen der Referenzzellen wurden mit den gemäß (1) bis (3) hergestellten Zellen Entladungsmessungen (IECH, IECL, gepulste Widerstandsentladung) durchgeführt. Die Ergebnisse sind im Folgenden dargestellt:

**Referenzzelle A**

| Entladeart | Kapazität | Zinkausnutzung | Anmerkung |
|---|---|---|---|
| IECH | 280 mAh | 90 % | s. Fig. 1 |
| IECL | 282 mAh | 91 % | s. Fig. 2 |
| Widerstandsentladung | 270 mAh | 87 % | s. Fig. 3 |

**Referenzzelle B**

| Entladeart | Kapazität | Zinkausnutzung |
|---|---|---|
| IECH | 279 mAh | 90 % |
| Widerstandsentladung | 257 mAh | 83% |

**Erfindungsgemäße Zelle C**

| Entladeart | Kapazität | Zinkausnutzung | Anmerkung |
|---|---|---|---|
| IECH | 297 mAh | 96 % | s. Fig. 4 |
| IECL | 302 mAh | 98 % | s. Fig. 5 |
| Widerstandsentladung | 285 mAh | 92 % | s. Fig. 6 |

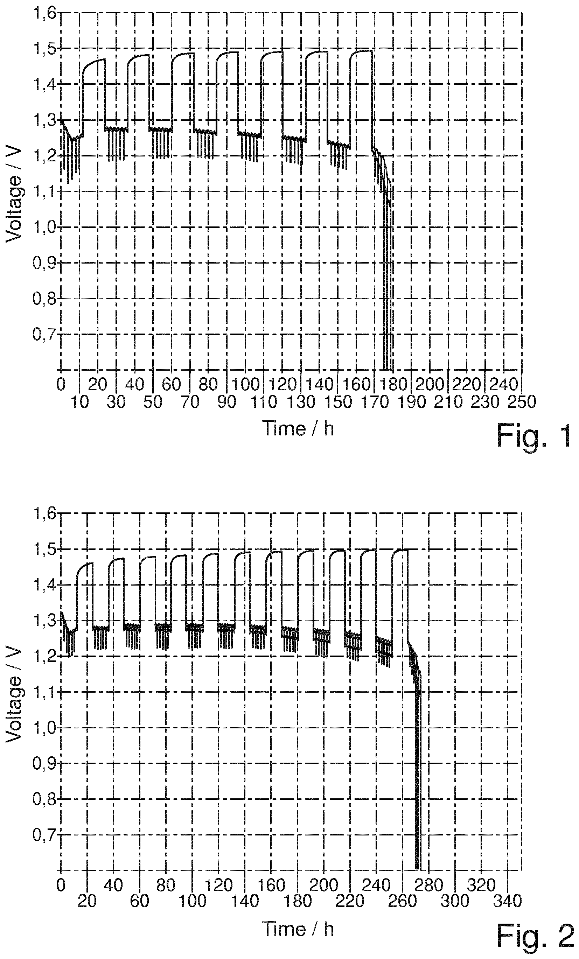

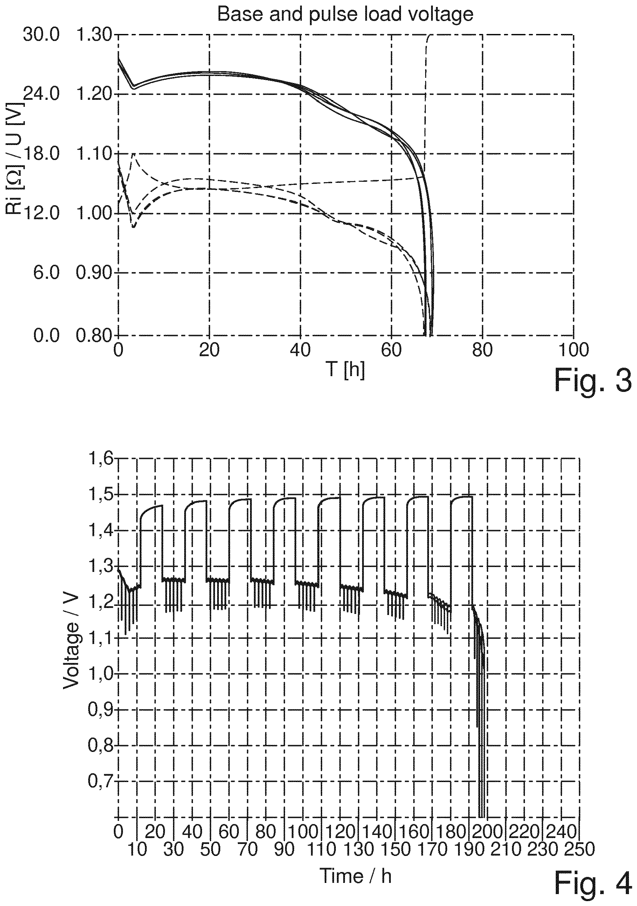

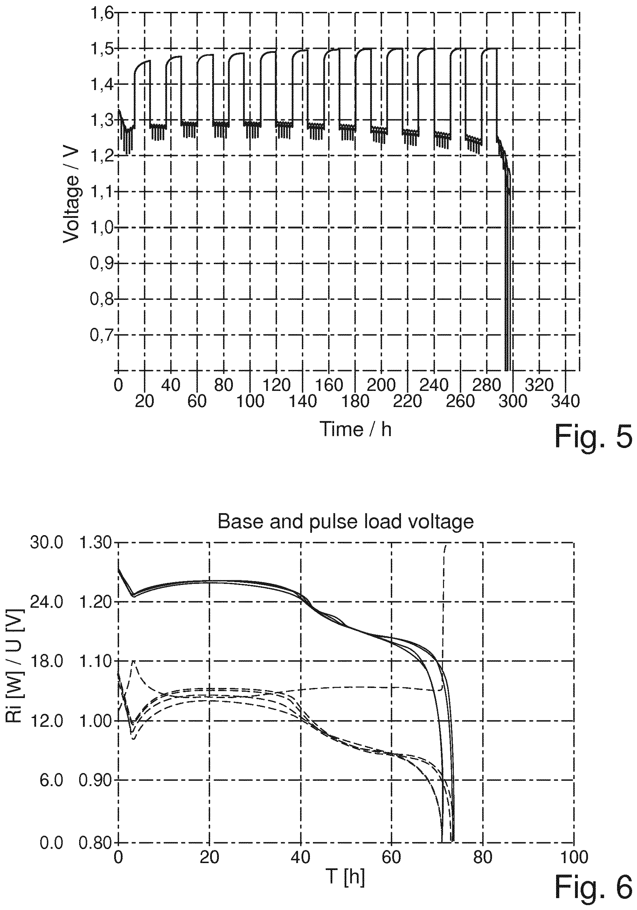

## Patentansprüche

1. Elektrochemische Zelle mit einer Elektrode, die als elektrochemisches Aktivmaterial eine Zink-Indium-Legierung aufweist, wobei die Legierung in Form von Partikeln vorliegt und sich die Gesamtheit der Partikel aus mindestens zwei Partikelfraktionen zusammensetzt, die sich hinsichtlich ihrer Indium-Konzentration unterscheiden.

2. Zelle nach Anspruch 1, **dadurch gekennzeichnet, dass** der Gesamtanteil an Indium in der Zelle bezogen auf das insgesamt in der Zelle enthaltene Zink zwischen 50 ppm und 5.000 ppm liegt.

3. Zelle nach Anspruch 1 oder Anspruch 2, **dadurch gekennzeichnet, dass** die Gesamtheit der Partikel eine erste Partikelfraktion aus Partikeln mit einer Indium-Konzentration von bis zu 2.500 ppm sowie eine zweite Partikelfraktion aus Partikeln mit einer Indium-Konzentration von bis zu 10.000 ppm umfasst, wobei die Indium-Konzentration in der zweiten Partikelfraktion höher liegt als in der ersten.

4. Zelle nach einem der vorhergehenden Ansprüche, **dadurch gekennzeichnet, dass** sich die Indium-Konzentrationen in den mindestens zwei Partikelfraktionenmindestens um den Faktor 1,1 unterscheiden.

5. Zelle nach einem der Ansprüche 3 oder 4, **dadurch gekennzeichnet, dass**
• zwischen 1 % und 99 der Partikel der ersten Partikelfraktion und
• zwischen 1 % und 99 % der Partikel der zweiten Partikelfraktion
angehören, wobei sich die Prozentangaben zu 100 % ergänzen, wenn die Gesamtheit der Partikel aus zwei Partikelfraktionen besteht.

6. Zelle nach einem der vorhergehenden Ansprüche, **dadurch gekennzeichnet, dass** sich die Partikel der mindestens zwei Partikelfraktionen in ihrer Größe nicht unterscheiden.

7. Zelle nach einem der vorhergehenden Ansprüche, **dadurch gekennzeichnet, dass** die Elektrode neben dem elektrochemischen Aktivmaterial mindestens einen der folgenden Bestandteile umfasst:
• einen Elektrolyten, insbesondere einen alkalischen Elektrolyten
• einen Elektrodenbinder
• einen Leitfähigkeitsverbesserer.

8. Zelle nach einem der vorhergehenden Ansprüche, **dadurch gekennzeichnet, dass** sie als Kathode eine Braunsteinkathode, eine Luftkathode, eine Silber(I)-Oxidkathode oder eine Quecksilberoxidkathode aufweist.

9. Verfahren zur Herstellung einer Elektrode, die als elektrochemisches Aktivmaterial eine partikelförmig vorliegende Zink-Indium-Legierung aufweist, wobei die Legierung in Form von Partikeln vorliegt und sich die Gesamtheit der Partikel aus mindestens zwei Partikelfraktionen zusammensetzt, die sich hinsichtlich ihrer Indium-Konzentration unterscheiden wobei zur Einstellung der Konzentration an Indium in der Anode Zinkpartikel mit einer ersten Konzentration an Indium mit Zinkpartikeln mit einer zweiten, von der ersten verschiedenen Konzentration an Indium gemischt werden.

## Claims

1. Electrochemical cell with an electrode having a zinc-indium alloy as electrochemical active material, the alloy being present in the form of particles, and the entirety of the particles being composed of at least two particle fractions which differ in their indium concentration.

2. Cell according to Claim 1, **characterized in that** the total amount of indium in the cell, based on the zinc present in total in the cell, is between 50 ppm and 5000 ppm.

3. Cell according to Claim 1 or Claim 2, **characterized in that** the entirety of the particles comprises a first particle fraction made up of particles having an indium concentration of up to 2500 ppm and also a second particle fraction made up of particles having an indium concentration of up to 10 000 ppm, the indium concentration in the second particle fraction being higher than in the first.

4. Cell according to any of the preceding claims, **characterized in that** the indium concentrations in the at least two particle fractions differ by a factor of at least 1.1.

5. Cell according to either of Claims 3 and 4, **characterized in that**
• between 1% and 99% of the particles belong to the first particle fraction and
• between 1% and 99% of the particles belong to the second particle fraction,
the percentages adding up to 100%, when the entirety of the particles consists of two particle fractions.

6. Cell according to any of the preceding claims, **characterized in that** the particles of the at least two particle fractions do not differ in their size.

7. Cell according to any of the preceding claims, **characterized in that** the electrode, in addition to the electrochemical active material, comprises at least one of the following constituents:
• an electrolyte, more particularly an alkaline electrolyte
• an electrode binder
• a conductivity improver.

8. Cell according to any of the preceding claims, **characterized in that** as cathode it has a manganese dioxide cathode, an air cathode, a silver(I) oxide cathode or a mercury oxide cathode.

9. Method for producing an electrode which has a zinc-indium alloy, present in particulate form, as electrochemical active material, the alloy being present in the form of particles, and the entirety of the particles being composed of at least two particle fractions which differ in their indium concentration, where the concentration of indium in the anode is set by mixing zinc particles having a first concentration of indium with zinc particles having a second concentration of indium that is different from the first concentration.

## Revendications

1. Cellule électrochimique comprenant une électrode, qui comprend en tant que matériau actif électrochimique un alliage de zinc et d'indium, l'alliage se présentant sous la forme de particules et la totalité des particules se composant d'au moins deux fractions de particules, qui diffèrent au regard de leur concentration en indium.

2. Cellule selon la revendication 1, **caractérisée en ce que** la proportion totale d'indium dans la cellule, par rapport au zinc contenu au total dans la cellule, est comprise entre 50 ppm et 5 000 ppm.

3. Cellule selon la revendication 1 ou la revendication 2, **caractérisée en ce que** la totalité des particules comprend une première fraction de particules constituée par des particules ayant une concentration en indium de jusqu'à 2 500 ppm et une deuxième fraction de particules constituée par des particules ayant une concentration en indium de jusqu'à 10 000 ppm, la concentration en indium dans la deuxième fraction de particules étant plus élevée que dans la première.

4. Cellule selon l'une quelconque des revendications précédentes, **caractérisée en ce que** les concentrations en indium dans lesdites au moins deux fractions de particules diffèrent au moins d'un facteur de 1,1.

5. Cellule selon l'une quelconque des revendications 3 ou 4, **caractérisée en ce que**
- entre 1 % et 99 % des particules appartiennent à la première fraction de particules et
- entre 1 % et 99 % des particules appartiennent à la deuxième fraction de particules,
la somme des données de pourcentage étant de 100 % lorsque la totalité des particules est constituée de deux fractions de particules.

6. Cellule selon l'une quelconque des revendications précédentes, **caractérisée en ce que** les particules desdites au moins deux fractions de particules ne diffèrent pas au regard de leur taille.

7. Cellule selon l'une quelconque des revendications précédentes, **caractérisée en ce que** l'électrode comprend en plus du matériau actif électrochimique au moins un des constituants suivants :
- un électrolyte, notamment un électrolyte alcalin,
- un liant d'électrode,
- un agent d'amélioration de la conductivité.

8. Cellule selon l'une quelconque des revendications précédentes, **caractérisée en ce qu'**elle comprend en tant que cathode une cathode en pyrolusite, une cathode à air, une cathode en oxyde d'argent (I) ou une cathode en oxyde de mercure.

9. Procédé de fabrication d'une électrode, qui comprend en tant que matériau actif électrochimique un alliage de zinc et d'indium présent sous forme particulaire, l'alliage se présentant sous la forme de particules et la totalité des particules se composant d'au moins deux fractions de particules qui diffèrent au regard de leur concentration en indium, des particules de zinc ayant une première concentration en indium étant mélangées avec des particules de zinc ayant une deuxième concentration en indium différente de la première pour l'ajustement de la concentration en indium dans l'anode.
